## Europäisches Patentamt
## European Patent Office
## Office européen des brevets

(11) Publication number: **0 021 615**
**B1**

(12) **EUROPEAN PATENT SPECIFICATION**

(45) Date of publication of patent specification: **23.04.86**

(51) Int. Cl.⁴: **G 01 F 3/22**

(21) Application number: **80301766.4**

(22) Date of filing: **28.05.80**

(54) Dry gas meters.

(30) Priority: **09.06.79 GB 7920156**

(43) Date of publication of application:
**07.01.81 Bulletin 81/01**

(45) Publication of the grant of the patent:
**23.04.86 Bulletin 86/17**

(84) Designated Contracting States:
**AT BE DE FR GB IT NL SE**

(56) References cited:
**GB-A- 780 898**
**GB-A-1 068 353**
**US-A-1 439 185**

(73) Proprietor: **UNITED GAS INDUSTRIES LIMITED**
**3-4, Bentinck Street**
**London W1M 6DH (GB)**

(72) Inventor: **Michaelides, Constatine**
**205 Portland Cresacent West**
**Stanmore, Middlesex (GB)**

(74) Representative: **Betteridge, Eileen Margaret**
**170, Rowan Road**
**Streatham Vale London, SW16 5JE (GB)**

Courier Press, Leamington Spa, England.

## Description

This invention relates to gas meters having one or more chambers each with a flexible diaphragm free to reciprocate back and forth, which back and forth movement operates valves admitting gas to the chambers. Such gas meters will be referred to hereinafter as "dry gas meters".

Dry gas meters require to be adjusted to achieve their nominal working characteristics by setting the phase relationship of the valves and diaphragms. Such adjustments as for instance described in U.K. patent No. 725,118 have involved skilled setting operations. A dry gas meter according to the preamble of Claim 1 is known from US—A—1439185.

This invention provides a dry gas meter having an adjustable crank assembly for translating reciprocating movements derived from the diaphragms into a rotational movement of a spindle which directly or indirectly drives the valves, said crank assembly comprising a tangent member rotatable on said spindle and carrying a worm wheel, a rack member secured to rotate with said spindle and carrying a circular rack engaged with said worm wheel, and crank arms secured to said tangent member to rotate it, said crank arms being connected to be reciprocated by movements derived from the diaphragms. This arrangement allows the tangent member to be rotated via the worm wheel relative to the spindle, thereby adjusting the phase relationship between the diaphragm position and the valve openings.

The tangent member may comprise a part-circular member, said worm wheel being mounted in spaced bearings at one side so that a worm gear of said wheel protrudes from the member. The rack member may comprise a disc located closely adjacent the tangent member so that the rack engages the protruding worm gear.

The tangent member may also have a plurality of locations for attachment of the crank arms, each location having a different radial distance from the spindle axis, whereby the throw of the crank arm may be selected. Said locations may comprise bores into which a common pin made of a resilient material for the crank arms may be removably spring-fitted.

The worm wheel may be rotated positively to any desired position so easily setting the phase relationship without any great skill. Moreover, when the phase relationship has been so set the correct crank arm throw can be achieved by "popping" the pin for the crank arm into the selected bore. The whole adjustment procedure therefore becomes simple and positive, losing the delicacy and skill required from previous arrangements.

A specific embodiment of the invention is shown in the accompanying drawings, in which:—

Figure 1 is an exploded view of the main working parts of a dry gas meter,

Figure 2 is a section through a gear box and a crank assembly of the gas meter of Figure 1,

Figure 3 is a detail plan view of a tangent member of the gas meter of Figure 1,

Figure 4 is a view of a worm of the dry gas meter of Figure 1.

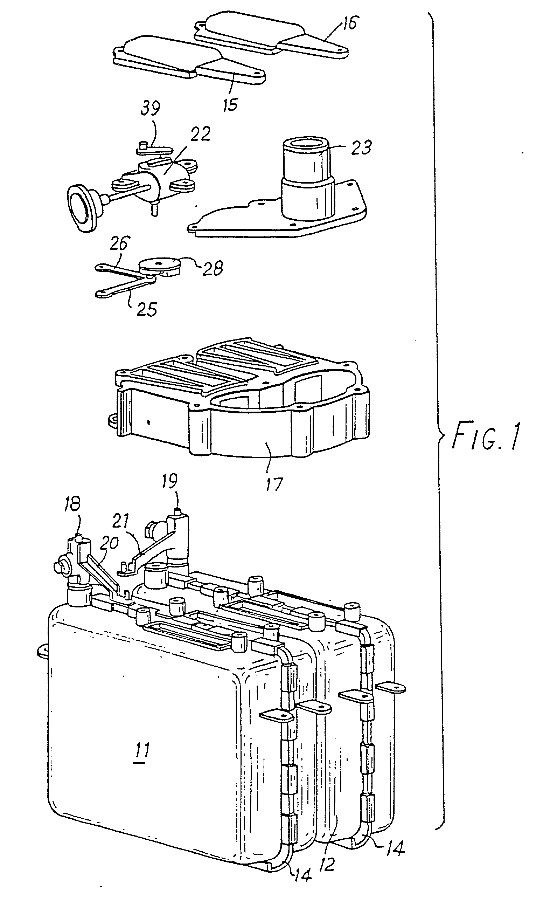

The dry gas meter shown in Figure 1 is of the kind comprising a pair of chambers 11, 12 mounted side by side, each having a reciprocating diaphragm 14 to either side of which gas is admitted via reciprocating valves 15, 16, in conjunction with valve seat 17, and exhausted via exhaust tube 23.

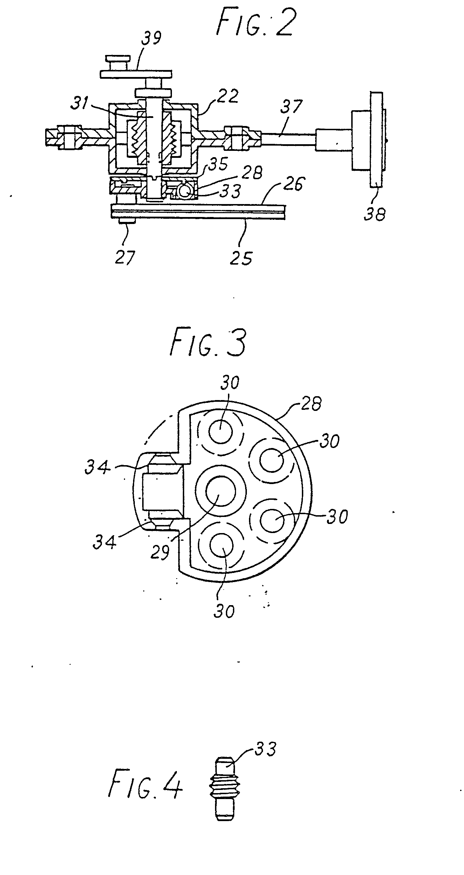

The reciprocating movements of the diaphragms are used both to drive the valves and to measure the gas volume flowing. The movements are transmitted to oscillating flag rods 18, 19 having oscillating flag arms 20, 21. The flat arms are connected to drive a gear box 22 through a crank assembly shown best in Figures 2 to 4.

The flag arms are connected to two crank arms 25, 26, each of which has one end pivotally mounted on a common pin 27, which pin is removably spring-fitted into a bore in a tangent member 28. The ends of the pin are slightly oversize with respect to the diameter of the bores so that the ends may be forced into the bores by resilient deformation, and spring back to their original size when fully inserted. As seen best in Figure 3, the tangent member 28 is part circular in plan having a central pivot opening 29 and four bores 30. The pin 27 may be fitted into any selected one of the four bores 30 which are at slightly different distances from the pivot opening 29. Therefore, the throw of the crank arms (the radial distance from the central pivot opening) may be selected for the gas meter by the choice of bore 30.

A spindle 31 of the gear box passes through the central pivot opening 29 and the tangent member 28 may be rotated relative thereto by a rack and worm wheel drive. The worm wheel 33 (Figure 4) formed integrally with a pin, has its ends sprung into engagement with bearing openings 34 in the tangent member so that the worm gear protrudes and engages an annular rack gear on a disc-shaped rack member 35. The disc is secured to rotate with the spindle 31 adjacent the tangent member. One end of the worm wheel has a slot which may be engaged by a screwdriver to rotate it, tending to move the rack member and tangent member in opposite directions. Since the rack member 35 is fixed to the spindle 31 it resists movement, so the tangent member which presents less resistance, is caused to rotate about the spindle. Thus the angular position of the crank arms relative to the spindle is adjusted by the rotation of the worm wheel. In use, the pressure of the crank arms on the tangent member produces forces parallel to the plane of the tangent member which do not include any force in the sense to rotate the worm wheel. The worm wheel therefore acts simply as a solid connection between the tangent member and the rack member and a drive path is maintained through the tangent arm and rack member to the spindle. No special locking device for the worm wheel is therefore required.

The spindle 31 extends into the gearbox 22 and carries a spiral gear driving an index spindle 37. A first magnet 38 of a magnetic coupling is carried by spindle 37 and drives an index (not shown) whereby the volume of gas flowing through the meter is measured.

The upper end of the spindle 31 is secured to further crank arms 39, to which levers driving the valves 15, 16 are secured. The spindle 31 therefore drives both the index and the valves. The adjustment of the angular position of crank arms 25, 26 with respect to the spindle described above effectively alters the phase relationship between the movements of the diaphragms and the opening and shutting of the valve.

The crank arms 25, 26, tangent member and worm wheel, and disc 35 are formed of a resilient plastics material, e.g. acetal, which allows the parts to be sprung into and out of engagement with one another.

When the gas meter is being adjusted to provide a required performance, the phase relationship of the valve opening and the position of the diaphragm is set. This setting, however, affects the travel of the diaphragm in its reciprocating motion since the diaphragm slows down and stops moving when the respective exhaust passage is opened. Accordingly, to arrange for the correct diaphragm length of movement the throw of the crank arms is adjusted as described above by selection of bore 30.

The gas meter adjustment can therefore be made using only simple tools, a screwdriver to adjust the phase relationship and springing the pin 27 into the appropriate bore. It will be noted that although pin 27 may be readily removed from the bore, in use the forces on the pin are not such as to tend to remove it from the bore.

## Claims

1. A dry gas meter of the kind having an adjustable crank assembly for translating reciprocating movements derived through crank arms (25, 26) from diaphragms (14), into a rotational movement of a spindle (31) which directly or indirectly drives valves (15, 16), said adjustable crank assembly comprising a tangent member (28) mounted rotatably on said spindle (31) characterised by said tangent member (28) carrying a worm wheel (33), and by a rack member (35) secured to rotate with the said spindle (31) and carrying a circular rack gear engaged with said worm wheel (33), said crank arms (25, 26) being releasably secured to the tangent member (28) to rotate it, whereby the tangent member (28) may drive through the worm wheel (33) and rack member (35) to rotate the spindle (31).

2. A dry gas meter as claimed in claim 1, further characterized by said tangent member (28) being part-circular and providing a pair of spaced bearings (34) for the worm wheel (33) whereby the worm wheel (33) is rotatably supported with the gear thereof protruding from the plane of the tangent member (28), and by said rack member (35) being a disc closely adjacent the tangent member (28) so that the rack gear engages the protruding worm gear.

3. A dry gas meter as claimed in claim 1 or claim 2, further characterized by said tangent member (28) having a plurality of locations (30) for the selective attachment of the crank arms (25, 26) whereby the throw of the crank arms (25, 26) may be selected.

4. A dry gas meter as claimed in claim 3, further characterized by said tangent member (28) being formed of a resilient plastics material, said locations (30) comprising a plurality of bores at different radial distances from the spindle axis, and said crank arms (25, 26) being secured to any one of said bores by a pin (27) of resilient plastics material having an oversize end which may be forced through the selected bore.

5. A dry gas meter as claimed in claim 4, further characterized by said crank arms (25, 26) also being formed of a resilient plastics material and having openings through which said pin (27) may be forced to form a spring fit.

## Patentansprüche

1. Ein Trockengaszähler der Art, die eine justierbare Kurbelwellenanordnung zur Ubertragung von Hin- und Herbewegungen hat, die uber Kurbelwellenarme (25, 26) von Membranen (14) in eine Drehbewegung einer Spindel (31) umgewandelt werden. Die Spindel regelt direkt oder indirekt die Ventile (15, 16). Die justierbare Kurbelwellenanordnung besteht aus einem Tangentialelement (28), das auf der Spindel (31) drehbar angeordnet ist und durch ein Schneckenrad (33) und eine Zahnstange (35) charakterisiert ist. Letztere ist fest mit der Spindel (31) verbunden und dreht sich mit ihr. Sie ist weiter mit einem kreisförmigen Zahngetriebe versehen, das in das Schneckenrad (33) eingerückt ist. Die Kurbelwellenarme (25, 26) sind abnehmbar am Tangentialelement (28) befestigt, um dieses zu drehen, wodurch das Tangentialelement (28) über das Scheckenrad (33) und die Zahnstange (35) die Spindel (31) drehen kann.

2. Ein Trockengaszähler der Art wie in Anspruch 1 beschrieben, der weiter dadurch gekennzeichnet ist, dass das Tangentialelement (28) teilweise kreisförmig ist und ein Paar verteilter Lager hat (34), auf denen das Schneckenrad (33) ruht, wodurch das Schneckenrad (33) drehbar gelagert ist und das Schneckenradgetriebe aus der Ebene des Tangentialelements (28) herausragt. Weiter, dass die Zahnstange (35) eine Scheibenform hat und sehr dicht am Tangentialelement (28) liegt, so dass das Zahngetriebe in das herausragende Schneckenradgetriebe eingerückt ist.

3. Ein Trockengaszähler wie in Anspruch 1 oder 2 beschrieben und weiter dadurch gekennzeichnet, dass das Tangentialelement (28) eine Vielzahl von Positionen (30) für die wahlweise Befestigung der Kerbelwellenarme (25, 26) hat, wodurch die Kröpfung der Kurbelwellenarme (25, 26) veränderbar ist.

4. Ein Trockengaszähler wie, in Anspruch 3 beschrieben, der weiter dadurch gekennzeichnet ist, dass das Tangentialelement (28) aus einem elastischen Plastikmaterial besteht und die Positionen (30) aus einer Vielzahl von Bohrlöchern mit unterschiedlichen Radialabstand von der Spindelachse bestehen und die Kurbelwellenarme (25, 26) durch einen Stift (27) aus elastischem Plastikmaterial festgehalten werden, die ein übergrosses Endteil besitzen, das in die Bohrlöcher hereingezwängt werden kann.

5. Ein Trockengaszähler wie in Anspruch 4 beschrieben, der weiter dadurch gekennzeichnet ist, dass die Kurbelwellenarme (25, 26) auch aus elastischem Plastikmaterial bestehen und Öffnungen besitzen, durch die die Stifte (27) gesteckt werden können, so dass sie zu einer federbesetzten Halterung werden.

**Revendications:**

Un compteur à gaz du type à manivelle réglable pour transformer les mouvements alternatifs provenant de diaphragmes (14) à travers des bras de manivelle (25, 26) en mouvement rotatif d'une broche (31) qui commande directement ou indirectement les vannes (15, 16), la manivelle réglable susmentionnée comprenant un élément tangent (28) monté de façon rotative sur la broche susmentionnée (31); cette broche est caractérisée par l'élément tangent susmentionné (28) muni d'une roue à vis sans fin (33) et par une crémaillère (35) fixée pour assurer sa rotation avec la broche susmentionnée (31) et comprenant un engrenage à crémaillère circulaire engrené avec la roue à vis sans fin susmentionnée (33), les bras de manivelle (25, 26) indiqués précédemment étant fixés de façon démontable à l'élément tangent (28) pour en assurer la rotation, de sorte que l'élément tangent (28) puisse entraîner la roue à vis sans fin (33) et la crémaillère (35) pour faire tourner la broche (31).

2. Un compteur à gaz sec conforme aux revendications contenues dans la revendication 1 et caractérisé par la forme partiellement circulaire de l'élément tangent (28) qui comprend une paire de paliers espacés (34) pour la roue à vis sans fin (33) de sorte que la roue à vis sans fin (33) soit supportée de façon rotative son engrenage étant saillant par rapport au plan de l'élément tangent (28), et, d'autre part, par la crémaillère susmentionnée (35) qui est un disque situé tout à côté de l'élément tangent (28) de sorte que la crémaillère s'engage avec la vis sans fin saillante.

3. Un compteur à gaz sec conforme aux revendications indiquées dans les revendications 1 ou 2 et caractérisé également par le fait que l'élément tangent susmentionné (28) comprend plusieurs emplacements (30) pour assurer la fixation sélective des bras de manivelle (25; 26) en permettant ainsi la d'établir la course des bras de manivelle (25, 26).

4. Un compteur à gaz sec conforme aux revendications indiquées dans la revendication 3 et caractérisée par le fait que l'élément tangent (28) est fabriqué en matière plastique résistante, les emplacements indiqués (30) comprenant plusieurs orifices situés à différentes distances radiales de l'axe de la broche et les bras de manivelle susmentionnés (25, 26) étant fixés à l'un des orifices susmentionnés par une cheville (27) fabriquée en matière plastique résistante et possédant une extrémité surdimensionnés qui peut être forcée dans l'orifice sélectionné.

5. Un compteur à gaz sec conforme aux revendications indiquées dans la revendication 4 et caractérisé par le fait quel les bras de manivelle susmentionnés (25, 26) sont éngalement fabriqués en matière plastique résistante et possèdent des orifices à travers lesquels on pourra introduire la cheville (27) indiquée ci-dessus pour obtenir un montage à ressort.

*Fig.1*

FIG. 2

FIG. 3

FIG. 4